# EUROPEAN PATENT APPLICATION

(11) **EP 2 592 828 A1**
(43) Date of publication of application: **15.05.2013**
(21) Application number: 11188362.5
(22) Date of filing: 09.11.2011
(51) Int. Cl.: H04N 5/445, H04N 21/482

(54) **Apparatus and method for navigating an electronic program guide**

(71) Applicant: OpenTV, Inc., San Francisco, CA 94111 (US)
(72) Inventor: Chai, Crx K, Oakland,CA 94619 (US); Fishman, Alex, San Francisco, CA 94121 (US); Huntington, Matthew, Twickenham, Greater London TW1 1NH (GB); Chellin, Isaac, San Francisco, CA 94114 (US); Lu, Kevin, San Francisco, CA 94107 (US)
(74) Representative: Leman Consulting S.A.

(57) **Abstract**

The present invention relates to an apparatus and a method for navigating an EPG showing, for a plurality of channels, past, current and future media programs, each represented by a thumbnail element. To display the EPG on a display unit, it comprises a graphical user interface comprising means for filtering the programs according to predefined selectable criteria, means for scrolling the thumbnail elements of only one channel along a time line specifically associated with this channel and for scrolling said channels perpendicularly to said time line without moving the latter, means for realigning each time line of each channel according to a selectable time mark and means for tagging the thumbnail element of any media program with at least one tag corresponding to one of said selectable criteria.

## Description

### FIELD OF THE INVENTION

This invention relates to an apparatus and method for navigating an electronic program guide (EPG) of a media broadcasting service such as television, video or radio, preferably to an EPG for a touch tablet where the user navigates through the guide by scrolling through each channel independently, and then automatically organize according to user selection based on time, favorites, content recommendations, or social connections.

### BACKGROUND

An EPG is an interactive, onscreen display feature which displays information analogous to TV listings for channel programming. EPGs are typically arranged in a grid format with time listed on one axis (e.g. horizontal axis) and channels listed on the other axis (i.e. vertical axis). An EPG provides users with information about a media program for all media programs covered by the EPG, which typically ranges from the current half-hour up through the next seven days. The information about each media program may include the time, duration, synopsis, program title, topic and theme. The user can navigate the EPG from the current time through the next seven days in half-hour increments. Further, the EPG allows the user to highlight individual cells of the grid containing programming information, and once highlighted, the viewer can instantly switch to that media program if it is currently playing or record the media program if it is being aired in the future.

Interactive EPGs allow users to scroll up, down, left or right on the basis of time and channels. When this navigation occurs the entire grid shifts in the corresponding direction because all the channels and times are affected. Additionally a user has to scroll all the way back if they wish to go back to their original start time. The original start time corresponds only to shows that are within the current time frame, and the user cannot view shows which have already aired.

Thus, EPGs suffer a significant drawback in navigating between channels and times because both time and channel must be coordinated for navigation. An EPG traditionally does not allow the user to go back in time and view media programs that have already broadcasted, nor can the user scroll each channel independently of another channel regardless to their time correspondence. Thus it is the objective of this present invention to provide an EPG that overcomes this drawback.

### SUMMARY OF THE INVENTION

The present invention refers to an apparatus for navigating an electronic program guide of a media broadcasting service showing, chronologically and for a plurality of channels, past, current and future media programs, each represented by a thumbnail element. This apparatus comprising a graphical user interface for displaying the electronic program guide on a display unit. The graphical user interface comprising:
- means for filtering media programs according to predefined selectable criteria,
- means for scrolling the thumbnail elements of any one of said channels along a specific time line, associated and held in position (i.e anchored) together with the thumbnail elements of this channel, without scrolling the thumbnail elements of the other channels, and for scrolling simultaneously all thumbnail elements (12) of all channels perpendicularly to the time lines without moving the latter,
- means for realigning the thumbnail elements of all channels by realigning each time line of each channel according to a selectable time mark preferably displayed near the middle of the display unit,
- means for tagging the thumbnail element of any media program with at least one tag corresponding to one of selectable criteria and for deselecting this thumbnail element of this tag.

Additionally, this apparatus further comprises means for overlaying a label on media programs that are currently playing.

Other optional features will be disclosed in the following description of the invention.

The present invention also refers to a method for navigating an electronic program guide of a media broadcasting service showing, chronologically for a plurality of channels, past, current and future media programs, each represented on a display unit by a thumbnail element. This method being designed to achieve the following steps:
- filtering the media programs according to predefined selectable criteria,
- scrolling the thumbnail elements of any one of said channels along a specific time line associated and held in position together with the thumbnail elements of this channel, without scrolling the thumbnail elements of the other channels,
- scrolling simultaneously all thumbnail elements (12) of all channels (11) perpendicularly to their time line (14) without moving the latter,
- realigning the thumbnail elements of all channels by realigning each time line of each channel according to a selectable time mark,
- tagging the thumbnail element of any media program with at least one tag corresponding to one of said selectable criteria,
- deselecting said thumbnail element of said tag.

### BRIEF DESCRIPTION OF THE DRAWINGS

The present invention will be better understood thanks to the attached figures in which some embodiments are illustrated by way of example and are not limited by the accompanying drawings, in which:
Fig. 1 is a block diagram illustrating the apparatus of the present invention.
Fig. 2 is a block diagram illustrating a graphical user interface for displaying information relating to video programs, according to some embodiments.
Fig. 3A, 3B, 3C are block diagrams illustrating the graphical user interface when the user navigates through the channels, according to some embodiments.
Fig. 4A, 4B are block diagrams illustrating the graphical user interface when the user navigates through the channels, according to some embodiments.

### DETAILED DESCRIPTION

The following detailed description of the invention refers to the accompanying drawings. The same reference numbers in different drawings identify the same or similar elements. Also, the following detailed description does not limit the invention. It will be evident to one skilled in the art, that the present invention may be practiced without these specific details.

For purposes of the present disclosure, the term "touch tablet device" is meant to include certain tablet computing devices and portable media player devices. Persons skilled in the art will immediately recognize that certain mobile computing devices, such as iPad® devices, developed by and available from Apple Corporation of Cupertino, CA, Galaxy® devices, developed by and available from Samsung Electronics Corporation of Ridgefield Park, NJ, and Xoom® devices, developed by and available from Motorola Mobility Incorporated of Libertyville, IL, fall within the intended definition of a mobile computing device.

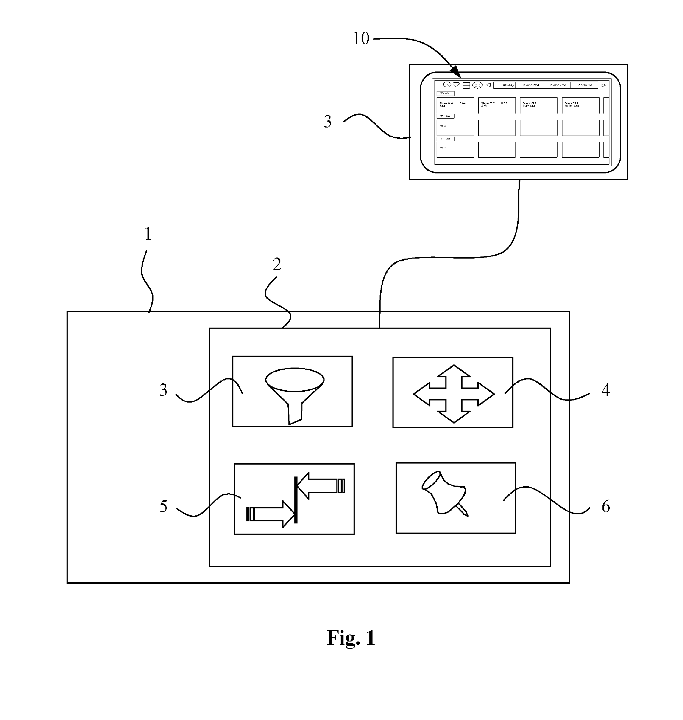

Referring to Fig. 1, the latter shows a block diagram of the apparatus 1 of the present invention used for navigating an electronic program guide 10 of a media service. This apparatus 1 comprises a graphical user interface 2 for displaying the electronic program guide 10 on a display unit 7. This graphical user interface 2 comprises filtering means 3 for filtering media programs suggested through the media service, scrolling means 4 for scrolling thumbnail elements representing these media programs on the screen, realigning means 5 for rearranging these thumbnail elements according to a configurable time mark and tagging means 6 for tagging one or several of these thumbnail elements with a label or a tag. For instance, such an apparatus could be typically a tablet computer providing a convenient touch screen that can be easily used for navigating en EPG. However, it should be understood that other apparatus and/or display device, such as standard computer with a computer monitor or beamer as output displaying means, television screen or other non-touch screens coupled to a portable device, could be also used instead of aforementioned computer tablet.

Consistent with some example embodiments, a digital content browsing and viewing application resides and executes on a computer tablet that has a touch screen display. The graphical user interface (GUI) of the content browsing and viewing application (hereinafter, "the content viewing application") includes various graphical user interface elements. For instance, the content viewing application will generally include rows of uniform sized thumbnails representing the programming aired on each row, which the user may navigate by using scrolling means, e.g. with his finger in case of touch screen, otherwise with any other wire or wireless pointing means such a computer mouse or a remote control provided with accelerometers. Scrolling is performed by a movement of a pointing means either along the time line or substantially perpendicular to the latter. Preferably, horizontal lines of the EPG referred in the present invention are used to display channels (one channel per horizontal line) and the time is referenced, for each channel, by a horizontal time line sliced by reference points or vertical lines. Each row of channels represents a different broadcast network. In addition, the content viewing application includes filtering means 3, e.g. in the form of button icons, which can be activated through the display unit and which are representative, for instance, of time, favorites, content recommendations, and social connections as predefined selectable sorting criteria. Therefore, these button icons being dedicated either to filter (i.e. to sort) the media programs with respect to a predefined selection criterion or to display a drop down menu providing various selection criteria that can be selected to filter the media programs. Alternately, the function of one or several button icons 3 could be also configurable by the user in order to add a selectable criterion that was not predefined by the system in its original version to filter displaying of media programs.

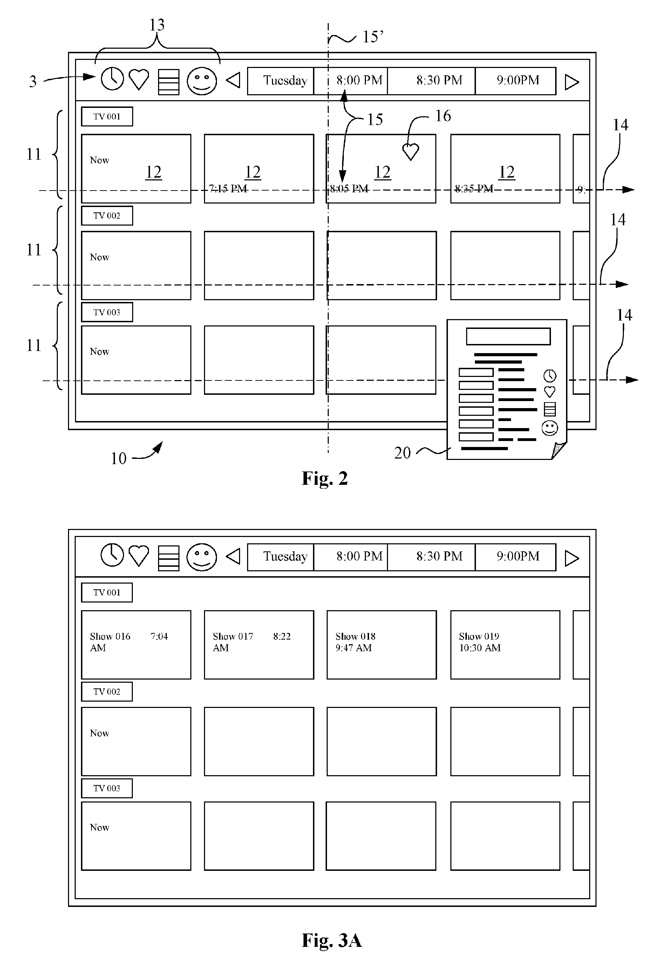

Fig. 2 shows what an EPG screen resembles prior to user navigation. The embodiment in Fig. 2 has tiles of uniform size horizontally lined up according to their corresponding channel 11 or broadcast network. Each tile is represented by a thumbnail element 12, such a picture, a text or a moving video display of the media program as provided by the broadcast network as well as the designated start time of the media program. Media programs are typically video, television and/or audio programs. The start time does not necessarily have to be in half-hour blocks as some programs may start before or after the half-hour block. Media programs that are currently playing have their thumbnail element 12 tagged for instance with an overlay image of "NOW" in place of the designated start time. Such a tag can be applied by means dedicated for marking (i.e. tagging) these thumbnails so the user can immediately recognize the media programs that are currently broadcasted. The top of the screen has a menu consisting of button icons 3 from which the user may select the manner in which he wishes to view the thumbnail programming due to predefined criteria 13 associated to these button icons 3. As suggested in the attached drawings, the button icon representing time allows the user to filter programming based on time. The button icon representing a heart allows the user to filter programming based on his favorite programs. The button icon representing a tag allows the user to filter programming based on certain meta-tags of selected thumbnail programs. The button icon representing a face allows the user to filter programming based on the viewing behavior of his social connections. Optionally, the predefined criteria could also be defined by the user, in particular if certain criteria deemed as useful by the user were not suggested by the system in its original version. According to another embodiment, these predefined criteria may be updated, for instance by updating the firmware of the apparatus in accordance with a conventional communicating means.

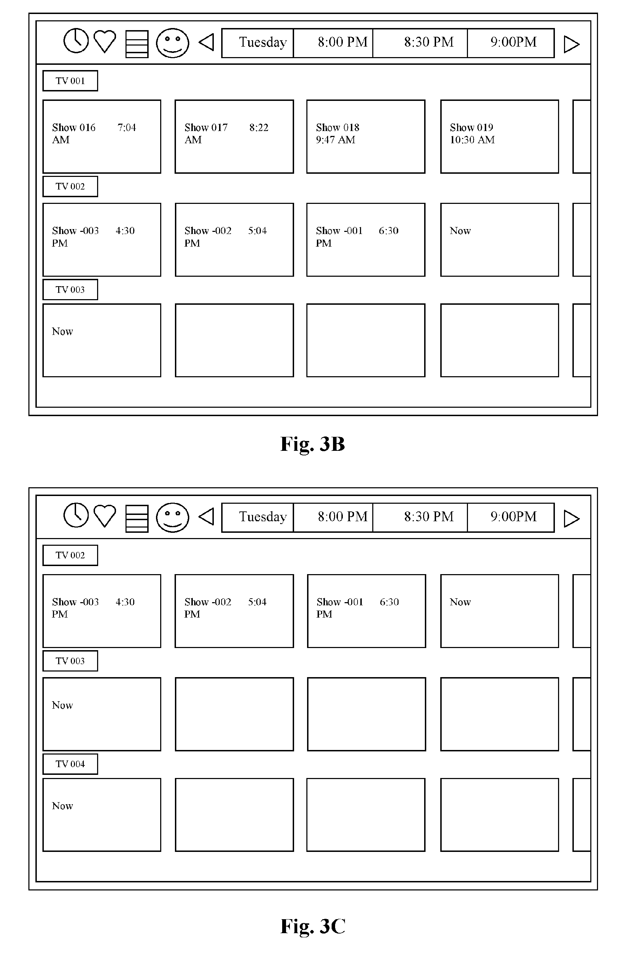

Referring now to the invention in more detail, Fig. 3A-3C show what an EPG screen resembles during user navigation. For instance, the user may slide his finger, or any other pointing means, right or left over a row corresponding to the channel that the user want to explore and the thumbnail elements of the media programs will shift accordingly. The user can navigate through one row of channels at a time without moving the other rows of channels. Consistent with this example embodiment Fig. 3A shows where the user has scrolled several days ahead on the first displayed row of channels while the other displayed row of channels remain at the current time position. Additionally, in another embodiment consistent with this example Fig. 3B shows where the user has scrolled back on the second displayed row of channels in addition to scrolling forward on the first displayed row of channels. More precisely, the user can scroll a first row of channels to the left to go back in time and scroll a second row of channels to the right to go forward in time.

For instance, consistent with some example embodiments, Fig. 3C shows that a user can still touch and scroll the screen up and down to move between channels. During the up and down scrolling the rows of channels do not realign unless designated by the user. More precisely, the content viewing application locks each of the row of channels to where the user designated and remains in that location while the user scrolls up or down through the rows of channels. Additionally, consistent with some example embodiments, when the user chooses to realign the content viewing application, the speed at which the thumbnail programs will readjust depends on how far or how back the user has navigated each individual row of channels. For instance, if a user has navigated only a few shows back on one row of channels and a couple days forward on a second row of channels then the row of channels will scroll back in different speeds such that all the row of channels stop the realignment process simultaneously.

Referring now to the invention in more detail, Fig. 3B shows what an EPG screen resembles when a user navigates left on the row of channels to view programming that has already aired. Consistent with some embodiments the GUI only displays those programs which have been recorded by the broadcast network or directly by the user and stored in a memory for viewing later. More precisely, a channel which does not record previously aired shows will display e.g. a blank thumbnail program with an overlay image stating the program is not available and, for instance, only those channels which have recorded programs will display those thumbnail programs which are available for user viewing.

Referring now to the invention in more detail, the embodiment in Fig. 2 shown an EPG illustration with the time selection button icon 3 at the top of the screen. Consistent with this example embodiment, a user may press and hold his finger on a first GUI element 3 displayed on the touch screen device 7, such as the time selection button icon, while dragging, or otherwise moving his finger to "pull" the first GUI element and then lift his finger as if to "drop" the element on top of a second GUI element, such as the thumbnail of a media program ― such manipulation commonly referred to as a "drag-anddrop" operation. By dragging and dropping a first GUI element over the top of a second GUI element, the user can invoke a wide variety of operations that intuitively make sense to the user based on what the various GUI elements represent. For instance, dragging and dropping the time selection icon over the top of a second GUI element automatically invokes an operation to realign all rows of channels, i.e. to realign their time line, such that the start time on the EPG corresponds to the time frame of the selected second GUI element. This provides a means for realigning the thumbnail elements of all channels by realigning each time line around a selectable time stamp or time mark. As the time line of any channel is anchored with its thumbnail elements, i.e. associated and held together with the thumbnails elements of this channel, realigning of the time line causes realigning of the thumbnail elements associated to this time line. As shown in Fig. 2, a time line 14 can be a virtual line constituted by a series of start times of the programs overlaid on the thumbnail elements 12. Besides, a time mark may correspond to the broadcasting time of any one of displayed media programs, in particular its start time. Overall, means for realigning the time lines 14 refers to a means allowing to designate a time mark 15, to be used as reference or origin point 15', for instance by selecting the thumbnail element 12 of the media program whose start time corresponds to said time mark. More precisely, the time selection button icon allows the user to automatically find all programming being broadcasted across all channels during the user selected time frame. All the rows of channels will automatically realign such that the start time on the EPG corresponds to the user's current time. Such a realignment may be displayed e.g. near the middle of the display unit (as shown on Fig. 2) or near of its left side. In summary, the steps for realigning the thumbnail elements 12 of all channels 11 by realigning their time line according to a time mark 15 can be performed by activating a predefined button icon 3 through the display 7, then by selecting any thumbnail element 12 of a media program which corresponds to the time mark according to the time line 14 of its channel 11.

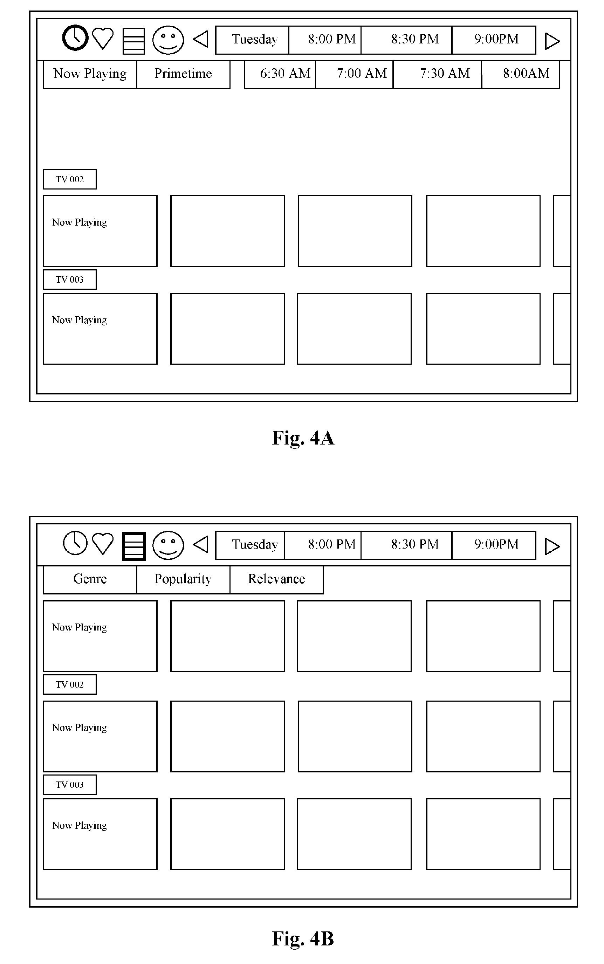

In another embodiment in Fig. 4A the user may tap or "click" his finger on a first GUI element displayed on the touch screen device 7, such as a time selection icon. By clicking on the time selection button icon a drop down menu appears listing options for selecting programs "NOW PLAYING", "PRIMETIME", or during a user selected time frame. The user may use his finger to scroll left or right on the time bar to see what programs are scheduled during certain time frames. When the user scrolls the time bar, the "NOW PLAYING" icon and "PRIMETIME" icon remain constant such that the user may select those options at any time despite the location of the time bar scrolling. More precisely, the user can scroll and click on any time frame on the time bar, or the "NOW PLAYING" or "PRIMETIME" icons for the content viewing application to automatically align to the selected time.

According to one embodiment, each thumbnail element 12 can be associated with a displayable media card 20 that appears on the display (e.g. in overprinting) upon a specific interaction with this thumbnail element. Such a media card 20 providing information about the media program associated to this thumbnail element. A specific interaction can be for instance a double-click on the thumbnail element 12 or a right-click if the pointing means is a computer mouse. Additionally, the media card 20 may comprise a context menu (e.g. a drop down menu) offering a plurality of available operations relating to the thumbnail element.

Consistent with one example embodiment, Fig. 2 shows an EPG illustration with a heart button icon at the top of the screen. By dragging and dropping a first GUI element, the heart button icon, over the top of a second GUI element, a thumbnail element 12 of a media program, the user can invoke a wide variety of operations that intuitively make sense to the user based on what the various GUI elements represent. For instance, dragging and dropping the heart icon over the top of a thumbnail element of the media program automatically tags the thumbnail program as a favorite program of the user. An overlay 16 of the heart icon is placed on the thumbnail element 12 of this media program so that the user recognizes that the program has been tagged under his favorites. The user can also "un-click" a favorite for deselecting the thumbnail element of this tag 16, for instance by clicking the heart overlay icon or by going to the media card 20 for that thumbnail program and pressing "Remove Favorite" button for instance. More precisely, dragging and dropping the heart icon onto a thumbnail program allows the user to mark that program as a part of his list of favorite programs.

In another embodiment of Fig. 2, the user may tap or "click" his finger on a first GUI element displayed on the touch screen device 7, such as a heart button icon. By clicking on the heart button icon all the shows tagged by the user as his favorite automatically appears on the grid irrespective of their row of channel association. Thus, such an operation allows to filter the displayed media programs according to a selectable criterion 13, namely favorite programs in this case. The thumbnail programs are ordered based on those thumbnail programs which are currently broadcasted to those which are broadcasted at a time furthest from the user's current time. More precisely, the heart icon allows the user to automatically find all programming being aired across all channels that the user has marked as a favorite.

Consistent with one example embodiment, there is shown in Fig. 2 an EPG illustration with a tag button icon at the top of the screen. By dragging and dropping a first GUI element, the tag icon, over the top of the second GUI element, a thumbnail element of a media program, the user can view the content viewing application with only media programs that have matching meta-tags with the second GUI element. A meta-tag contains information about the specific thumbnail program such as names of actors, type of genre, type of theme, but are not limited to these descriptors. Each meta-tag associated with the second GUI element will be displayed as its own channel in the row of channels. All media content with similar meta-tags will fall under the respective meta-tag channel. The thumbnail elements 12 of the media programs are ordered based on those which are currently airing to those which are airing at a time furthest from the user's current time. More precisely, the tag button icon allows users to search and navigate what other content related programming is airing based on the meta-tags of a selected thumbnail program where each meta-tag is used as a channel marker.

In another embodiment of Fig. 4B, the user may tap or "click" his finger on a GUI element displayed on the touch screen device, such as a tag button icon at the top of the screen. By clicking on the tag button icon a drop down menu appears with various methods of sorting the content on the content viewing application. The user may select "GENRE", "POPULARITY", "RELEVANCE." Based on the user selection, the thumbnail elements of the corresponding media programs will align accordingly.

For instance, consistent with one example embodiment, if the user selects "GENRE" the row of channels are organized based on the genre, irrespective of broadcast network, such that a user can scroll through the shows in any given genre. The thumbnail elements of the media programs are ordered based on their airing time with currently playing media programs appearing first. More precisely, instead of navigating by channel the user navigates by genre type.

In yet another example, the user of the content viewing application may select "POPULARITY" in which case the content viewing application will sort the thumbnail elements of media programs that have been most recorded, most watched, most shared, most commented or will filter these programs according to other criteria. The thumbnail programs are ordered based on their broadcasting time with currently playing programs appearing first. More precisely, instead of navigating by channel the user navigates by the popularity of the thumbnail programs.

In another example, the user of the content viewing application may select "RELEVANCE" in which case the content viewing application will align with thumbnail element of media programs that are recommended for the user based on the user behavior and preferences. Algorithms for determining user behaviors and providing recommendations are sourced from programs by any third party recommendation provider. The recommendation provider gives the recommendation logic for which the results are displayed according to users past viewing history, age, gender, and other characteristic embodiments. More precisely, a user may navigate through those thumbnail elements of media programs which are specially chosen for the user on the basis of the user's viewing behavior.

In another embodiment of Fig. 2, the user may tap or "click" his finger on a GUI element displayed on the touch screen device, such as a face button icon at the top of the screen. By clicking on the face button icon the row of channels are organized based on the user's social connections, such that a user's friends' viewing become the row of channels. The user may have social connections which are uploaded from Facebook ©, Myspace ©, Twitter ©, or other user selected social networks. The face button icon allows the user to view what his social connections are viewing or have viewed. The thumbnail elements of the media programs are ordered based on their broadcasting time with currently playing programs appearing first. The GUI element designating the row of channels in the present embodiment can display the name of the social connection as well as the profile image of the social connection. The user may then scroll through the row of channels to navigate through the viewing history of the social connections. More precisely, the user is not restricted to navigating based on designated broadcast networks but can navigate through customized viewing preferences of the user's own social connections.

The apparatus 1 of the present invention could be configured to output data for generating an EPG 10 as disclosed above, with means for filtering 3, scrolling 4, realigning 5 and tagging 6 which allow navigating this EPG in accordance with the operations or steps disclosed in the present description.

## Claims

1. Apparatus (1) for navigating an electronic program guide (10) of a media broadcasting service showing, chronologically for a plurality of channels (11), past, current and future media programs, each represented by a thumbnail element (12), said apparatus comprising a graphical user interface (2) for displaying said electronic program guide (10) on a display unit (7), said graphical user interface (2) including:
- means for filtering (3) said media programs according to predefined selectable criteria (13),
- means for scrolling (4) said thumbnail elements (12) of any one channel (11) along a specific time line (14) associated and held in position together with the thumbnail elements (12) of this channel (11), without scrolling the thumbnail elements (12) of the other channels (11), and for scrolling simultaneously all thumbnail elements (12) of all channels (11) perpendicularly to their time line (14) without moving the latter,
- means for realigning (5) the thumbnail elements (12) of all channels (11) by realigning each time line (14) of each channel (11) in accordance with a selectable time mark (15).
- means for tagging (6) the thumbnail element (12) of any media program with at least one tag (16) corresponding to one of said selectable criteria (13) and for deselecting said thumbnail element (12) of this tag (16).

2. Apparatus of claim 2, wherein it comprises a means for marking the thumbnail elements (12) of media programs that are currently playing.

3. Apparatus of claim 1 or 2, wherein said means for filtering (3) said media programs are button icons which can be activated through said display unit (7).

4. Apparatus of claim 1, wherein said time mark (15) corresponds to a broadcasting time of one of said media programs.

5. Apparatus of any preceding claim, wherein said display unit (7) is a touch screen display.

6. Apparatus of any preceding claim, wherein said past media programs are media programs which have been stored in a memory by a recording means.

7. Method for navigating an electronic program guide (10) of a media broadcasting service showing, chronologically for a plurality of channels (11), past, current and future media programs, each represented on a display unit (7) by a thumbnail element (12), the method being designed to achieve the following operations:
- filtering said media programs according to predefined selectable criteria (13),
- scrolling the thumbnail elements (12) of any one channel (11) along a specific time line (14) associated and held in position together with the thumbnail elements of this channel, without scrolling the thumbnail elements (12) of the other channels (11),
- scrolling simultaneously all thumbnail elements (12) of all channels (11) perpendicularly to their time line (14) without moving the latter,
- realigning the thumbnail elements (12) of all channels (11) by realigning each time line (14) of each channel (11) according to a selectable time mark (15),
- tagging the thumbnail element (12) of any media program with at least one tag (16) corresponding to one of said selectable criteria (13),
- deselecting said thumbnail element (12) of said tag (16).

8. Method of claim 7, wherein filtering said media programs is performed by activating a button icon (3) through said display unit (7), said button icon (3) being dedicated either to filter said media programs with respect to a predefined selection criterion (13) or to display a drop down menu providing various selection criteria that can be selected to filter said media programs.

9. Method of claim 7 or 8, wherein scrolling is performed by a movement of a pointing means either along the time line (14) or perpendicularly to the latter.

10. Method of any of claims 7 to 9, wherein realigning the thumbnail elements (12) of all channels (11) by realigning each time lines (14) according to said time mark (15) is performed by activating a predefined button icon (3) through said display, then selecting any thumbnail element (12) of a media program which corresponds to said time mark (15) according to the time line (14) of its channel (11).

11. Method of claim 7 or 10, wherein realigning the thumbnail elements (12) of all channels (11) by realigning each time lines (14) is displayed by scrolling simultaneously every thumbnails elements (12) of all channels (11) to be realigned before to simultaneously stop these thumbnails elements (12) with respect to the time mark (15).

12. Method of any of claim 8 to 11, wherein tagging of a thumbnail element (12) is achieved by holding and dragging any button icon (3), then dropping it on said thumbnail element (12).

13. Method of any of claims 7 to 12, wherein a specific interaction with any thumbnail element (12) allows displaying a media card (20) associated with said thumbnail element (12), said media card (20) providing information about the media program associated to this thumbnail element (12).

14. Method of claim 13, wherein said media card (20) comprising a context menu offering a plurality of available operations in connection with said thumbnail element (12).

15. Method of any of claims 7 to 14, wherein said navigating operations are performed by a finger acting as a pointing means on a touch screen used as display unit (7).
